# EUROPEAN PATENT SPECIFICATION

(11) **EP 1 957 397 B1**
(45) Date of publication and mention of the grant of the patent: **15.04.2015**
(21) Application number: 06823857.5
(22) Date of filing: 01.12.2006
(51) Int. Cl.: H01J 9/02, H01J 1/304

(54) **METHOD OF MANUFACTURING CARBON NANOTUBE (CNT) PASTE AND EMITTER WITH HIGH RELIABILITY**
VERFAHREN ZUR HERSTELLUNG VON KOHLENSTOFFNANORÖHREN(CNT)-PASTE UND EMITTER MIT HOHER ZUVERLÄSSIGKEIT
PROCEDE DE FABRICATION DE PATE DE NANOTUBES DE CARBONE (CNT) ET D'UN EMETTEUR A HAUTE FIABILITE

(30) Priority: 06.12.2005 KR 20050118182; 05.09.2006 KR 20060084912
(43) Date of publication of application: 20.08.2008
(73) Proprietor: Electronics and Telecommunications Research Institute, Daejeon 305-350 (KR)
(72) Inventor: KIM, Dae Jun, Daejeon 305-770 (KR); SONG, Yoon Ho, Daejeon 302-795 (KR); JEONG, Jin Woo, Daegu 706-070 (KR)
(74) Representative: Betten & Resch
(86) International application number: PCT/KR2006/005149
(87) International publication number: WO 2007/066932

(56) References cited:
- EP-A- 1 553 613
- WO-A-01/99146
- JP-A- 2003 249 184
- KR-A- 20010 107 272
- US-A1- 2002 104 603
- US-A1- 2005 062 195
- US-A1- 2005 176 336
- US-B2- 6 811 457
- US-B2- 6 935 915
- NAM J W ET AL: "The influence of filler on the emission properties and rheology of carbon nanotube paste" DIAMOND AND RELATED MATERIALS, ELSEVIER SCIENCE PUBLISHERS, AMSTERDAM, NL, vol. 14, no. 11-12, 1 November 2005 (2005-11-01), pages 2089-2093, XP025331698 ISSN: 0925-9635 [retrieved on 2005-11-01]

## Description

### Technical Field

The present invention relates to methods of manufacturing carbon nanotube (CNT) paste which has nano-sized metal particles as a metal filler, and a CNT emitter with high reliability.

### Background Art

With recent developments in display technology, flat panel displays are often being used instead of conventional cathode ray tubes (CRTs). Liquid crystal displays (LCDs), plasma display panels (PDPs), and field emission displays (FEDs) are exemplary flat panel displays.

Among the flat panel display devices, especially FEDs follow similar physical principles to CRTs, except that electron emitters of CRTs are formed of a cold cathode material. In FEDs, an electric field is applied to a very fine field emitter (a cathode), and thereby an electron emitted from the field emitter into vacuum collides with a fluorescent material (that is, a fluorescent material is excited) to display an image. Accordingly, FEDs can be manufactured lightweight and thin still with an excellent display characteristic. As described above, FEDs are ideal in all aspects of the display device, so that they are attracting attention as the next generation display devices with the most potential.

Carbon nanotubes (CNTs) have recently been in the limelight as electron emitters of such FEDs. The CNTs provide the most excellent performance as emitters using a field emission principle in which an electron is emitted when an electric field is applied to a pointy conductive emitter in a vacuum state.

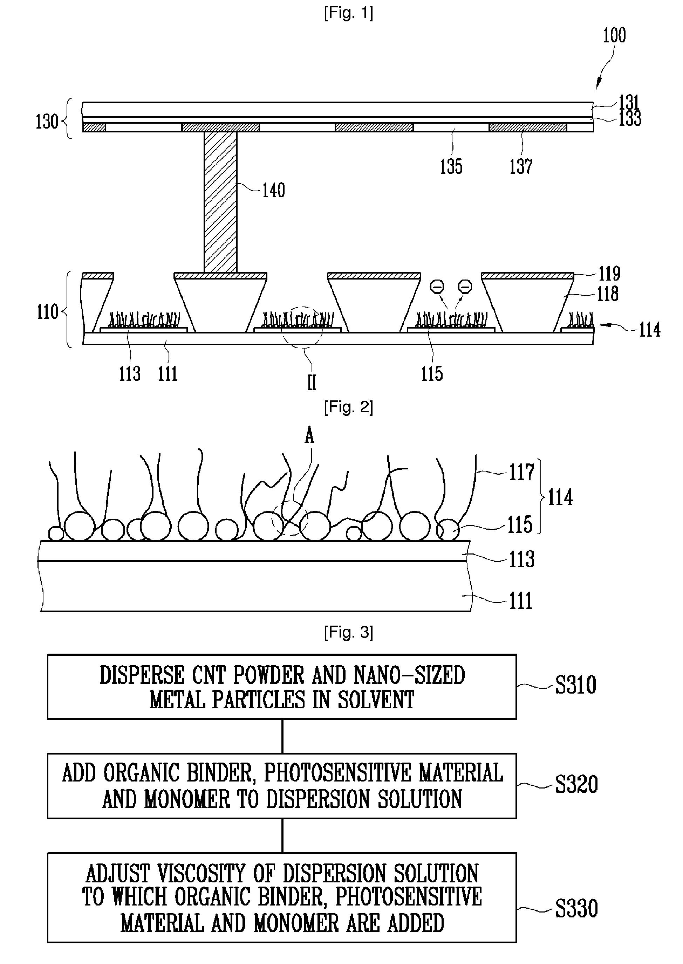

FIG. 1 is a schematic cross-sectional view of an FED using a conventional CNT emitter. An operation principle of the FED using CNT will now be described with reference to FIG. 1.

Referring to FIG. 1, the FED 100 includes an electron emission part 110 in which an emitter 114 is formed as an electron emitter, and an image display part 130 which has a fluorescent layer 135 generating light by colliding the light emitted from the electron emission part 110 with a fluorescent material.

The image display part 130 includes a second substrate 131, an anode 133 formed on the second substrate 131, fluorescent layers 135 formed on the anode 133 to be spaced apart from each other, and a light shielding layer 137 formed between the fluorescent layers 135. The light shielding layer 137 serves as a boundary between pixels.

The electron emission part 110 includes a first substrate 111, cathodes 113 formed on the first substrate 111 to be spaced apart from each other in a predetermined shape, a CNT emitter 114 manufactured using CNT on the cathode 113, and a gate electrode 119 insulated from and adjacent to the cathode 113. An insulating layer 118 is formed under the gate electrode 119. A spacer 140 is disposed between the electron emission part 110 and the image display part 130 to support them.

To manufacture the CNT emitter 114, CNT paste first has to be manufactured. The CNT paste may be manufactured by the steps of: (1) dispersing CNT and a metal filler; (2) adding an organic binder and a photosensitive resin; and (3) mixing the added materials using a solvent and adjusting its viscosity. The CNT paste manufactured by steps (1) to (3) is applied onto the cathode 113 of the electron emission part 110, and then exposed and patterned, and thus the CNT emitter 114 may be completed.

However, when the CNT emitter 114 is manufactured using the above-described CNT paste, there is a limitation to performance of the FED because adhesion between the cathode 113 and the CNT emitter 114 is not uniform, and thus resistance between the cathode 113 and the CNT emitter 114 or between CNTs of the CNT emitter 114 becomes high or non-uniform. That is, since the CNT emitter 114 is not formed on the cathode 113 with strong adhesion, when a strong electric field is generated in the CNT emitter 114, the CNT emitter 114 may be detached from the cathode 113. For this reason, contact resistance between the CNT emitter 114 and the cathode 113 may be non-uniform or increased, and only some of the CNT emitters 114 contribute to electron emission, thereby deteriorating an electron emission characteristic, which results in a decrease in electron emission sites and non-uniform distribution of electron emission. Also, since the resistance between the CNTs of the CNT emitter 114 may not be uniform, only some of the CNT emitters 114 serve to emit electrons, and thus a lifespan of the CNT emitter 114 drastically decreases.

To overcome the above-described problems, a method of reinforcing a role of the metal filler added to CNT paste is recently disclosed. FIG. 2 is a partial cross-sectional view of an enlarged region II of the CNT emitter 114 of FIG. 1, in which the role of the metal filler 115 added to the CNT paste is reinforced.

Since the submicrometer-sized metal filler 115 illustrated in FIG. 2 is significantly larger than the CNT 117, a dispersion degree in the CNT paste is not only very weak, but agglomeration A of the metal filler 115 and the CNT 117 may also occur. To reduce the agglomeration A, the metal filler 115 is made as small as possible, and thereby the non-uniform degree of dispersion between the metal filler 115 and the CNT 117 may be partially overcome.

However, the problems of the adhesion between the cathode 113 and the CNT emitter 114, and the resistance non-uniformity between the cathode 113 and the CNT emitter 114 or between the CNTs of the CNT emitter 114 may not be thoroughly resolved only by reducing the size of the metal filler 115.

J.W. Nam, "The influence of filler on the emission properties and rheology of carbon nanotubes", EP 1 553 613 A2, US 2005/0176336 A1, WO 01/99146 A2, KR 2001-0107272 disclose methods of manufacturing CNT paste comprising CNT powder and metal particles.

In J.W. Nam the metal particles have a size of 0.5-1.0µm. The weight percentage of the CNT powder and the metal particles in the CNT paste is 1.2wt% : 2wt%=1.2 : 2.

In EP 1 553 613 A2 the metal particles have a size of 1-500nm. The concentration of the CNT powder in the CNT paste is 1-30wt%. The concentration of the metal particles in the CNT paste is 0.1-20wt%.

In US 2005/0176336 A1 and KR 2001-0107272 the metal particles have a size of 0.01-100µm The ratio of the weight percentages of the CNT powder and the metal particles in the CNT paste is not indicated.

In WO 01/99146 A2 the size of the metal particles is not mentioned. The concentration of the CNT powder in the CNT paste is about 0.01-6.0wt%. The concentration of the metal particles in the CNT paste is about 3-15wt% (cf. page 8). The ratio of the weight percentage of the CNT powder and the metal particles in the CNT paste may be 80/20, 60/40, 40/60 and 20/80 (cf. page 16).

### Disclosure of Invention

### Technical Problem

The present invention is directed to a method of manufacturing carbon nanotube (CNT) paste improving adhesion between a CNT emitter and a cathode by adding a nano-sized metal particle which is meltable at a low temperature at which CNTs do not deteriorate.

Also, the present invention is directed to a method of manufacturing a CNT emitter with high reliability, which can improve uniformity of electron emission and increase electron emission sites by using CNT paste having a nano-sized metal particle.

### Technical Solution

The present invention provides a method of manufacturing carbon nanotube (CNT) paste as defined in present claim 1.

The present invention may further comprise the step of adding a photosensitive material and a monomer which is polymerized with the organic binder by reacting with the photosensitive material in the mixed dispersion solution.

When the metal particle is formed in a powder type, the metal particle may be added in step (i), whereas, when the metal particle is formed in a paste type, the metal particle may be added in step (iii). The metal particle is melted at a lower temperature than a deterioration point of the CNT powder. The metal particle may comprise Ag, Ru, Ti, Pd, Zn, Fe, or Au, which has excellent conductivity. The deterioration temperature of the CNT powder may be between 400 and 550°C.

The solvent may have a good surface active characteristic, and be formed of isopropyl alcohol (IPA) and terpineol.

The present invention also provides a method of manufacturing a CNT emitter as defined in present claim 8.

The step of plasticizing the CNT paste may comprise at least one of the steps of: plasticizing the CNT paste at about 250 to 300°C in an atmosphere; and plasticizing the CNT paste at about 320 to 450°C in a vacuum.

In the step of plasticizing the CNT paste in an atmosphere, burning-out of the organic binder and melting of the metal particle may be performed. In the step of plasticizing the CNT paste in a vacuum, carbonization of the remaining organic binder and additional melting of the metal particle may be performed.

In the step of treating the surface of the CNT paste, a rolling treatment in which glue does not get leftover may be performed.

### Advantageous Effects

As described above, a nano-sized metal particle capable of being melted at a low temperature at which carbon nanotubes (CNTs) do not deteriorate is added, thereby improving adhesion between a CNT emitter and a cathode. Also, CNT paste is evenly mixed in a conductor with excellent conductivity due to the melted metal particles, and thus the CNT emitter and the metal particle are stably adhered to a field emission device (FED), which induces uniform electron emission.

The adhesion between the CNT emitter and the cathode is improved by the melted metal particles, thereby reducing resistance between the cathode and the CNT, or between the CNTs. In result, the electron emission may be constantly maintained, and the density of an active emission site contributing to the electron emission may be increased, and thus the CNT emitter with high reliability may be provided.

### Brief Description of the Drawings

FIG. 1 is a schematic cross-sectional view of a field emission device (FED) using a conventional carbon nanotube (CNT) emitter;
FIG. 2 is a partial cross-sectional view of an enlarged region II of the CNT emitter of FIG. 1;
FIG. 3 is a block diagram illustrating a method of manufacturing CNT paste according to the present invention;
FIG. 4 is a block diagram illustrating a method of manufacturing a CNT emitter using the CNT paste manufactured in FIG. 3;
FIG. 5A is an enlarged cross-sectional view schematically illustrating a CNT emitter patterned using CNT paste to which a nano-sized metal particle is added according to an exemplary embodiment of the present invention;
FIG. 5B is an enlarged cross-sectional view schematically illustrating a completed CNT emitter after the step of plasticizing the CNT emitter in FIG. 3; and
FIGs. 6A to 6B are graphs respectively illustrating electron emission characteristics and electron emission uniformity versus time between the CNT emitter manufactured according to the present invention and the CNT emitter manufactured according to the conventional art.

### * Description of Major Symbol in the above Figures

500: CNT emitter
510: Substrate
520: Electrode
530: CNT paste
531: CNT (powder)
532 and 532a: Metal particles

### Mode for the Invention

Hereinafter, exemplary embodiments of the present invention will be described in detail. However, the present invention is not limited to the embodiments disclosed below, but can be implemented in various forms. Therefore, the following embodiments are described in order for this disclosure to be complete and enabling to those of ordinary skill in the art.

FIG. 3 is a block diagram illustrating a method of manufacturing carbon nanotube (CNT) paste according to the present invention. Referring to FIG. 3, to manufacture CNT paste, CNT powder and nano-sized metal particles are first dispersed in a solvent (S310).

Here, the metal particle may have a size of several or several tens of nanometers, and be formed in a powder or paste type. When the CNT powder and the nano-sized metal particles are dispersed together, the powdery metal particles are used. Although the step of dispersing the powdery metal particles together with the CNT powder is disclosed herein, the CNT paste may be manufactured using paste-type metal particles. In this case, the paste-type metal particles are added in a milling step that is a subsequent process.

The metal particle may be a highly conductive metal capable of making an ohmic contact to lower interface resistances between the CNTs, and between the CNT and a cathode (not illustrated) of the CNT emitter formed using the CNT paste. The highly conductive metals usable for the CNT paste include Ag, Ti, Pd, Zn, Au, Fe and Ru, which are individually used or properly mixed for use. Since the nano-sized metal particle is formed by mixing various metals, its adhesion and electrical characteristics may be improved.

The CNT powder and the nano-sized metal particles can be dispersed in most solvents such as a water-soluble solvent, an organic solvent, etc. However, in general, after dispersion is completed and then a predetermined time elapses, since the nano materials such as CNTs tend to agglomerate with each other, the solvent preferably has a good surface active characteristic. It is preferable that an additional solvent having a high temperature for vaporization (boiling point: about 150°C or more) is used together to protect rapid evaporation.

In this embodiment, the CNT powder and the nano-sized metal particles are dispersed in isopropyl alcohol (IPA) and terpineol which have a good surface active characteristic. In a case of using a mixed solvent of IPA and terpineol as a dispersing solvent, only terpineol is left after the CNT paste is completed. This is because the IPA, being used to disperse the CNTs, is dried after the CNT dispersion. The boiling point of the terpineol left after the CNT paste is manufactured is in a range of about 120 to 170°C.

Also, in the manufacturing the CNT paste, the CNT powder and the nano-sized metal particles are included with an appropriate composition ratio in consideration of a configuration of the CNT emitter to be manufactured employing the same. Here, in terms of a weight percentage (wt%), a composition ratio of the CNT powder to the metal particle is 1:2.

In the next step, an organic binder, a photosensitive material and a monomer are added to the dispersion solution in which the CNT powder and the nano-sized metal particles are dispersed (S320). As the organic binder added to the dispersion solution, various kinds of polymers such as acryl resin series or ethyl cellulose may be commonly used. The photosensitive material (photo initiator) directs the monomer to react when receiving light, which may be selected depending on the kind of the added organic binder, and particularly, a material matched with the organic binder may be preferably selected.

The monomer is a material added to obtain a patterning characteristic by exposure, which serves to be polymerized with a polymer by being initiated by the photosensitive material. The photosensitive material has to be optimized with an appropriate weight ratio of the monomer to the organic binder, and if the ratio is not appropriate, it may affect the final configuration of the CNT emitter. Thus, the photosensitive material is added to have a weight ratio ranging from 1/10 to 1/100 of the organic binder, and the monomer is added to have the same ratio as the photosensitive material. As such, when the photosensitive material is mixed in the CNT paste, the CNT paste applied on the substrate or electrode may be formed in a specific shape by exposure.

Although the method of manufacturing the CNT paste by adding the photo sensitive material is disclosed herein, the CNT paste may be patterned by a screen printing method when the photosensitive material is not added. In this case, the patterning is more effective to form a large pattern of 100 µm or more.

In the next step, the viscosity of the dispersion solution, to which the organic binder, the photoresist material, and the monomer are added, is adjusted (S330). A milling process is used to adjust the viscosity of the dispersion solution. A method of manufacturing a CNT emitter using the CNT paste manufactured through steps S310 to S330 will be described below.

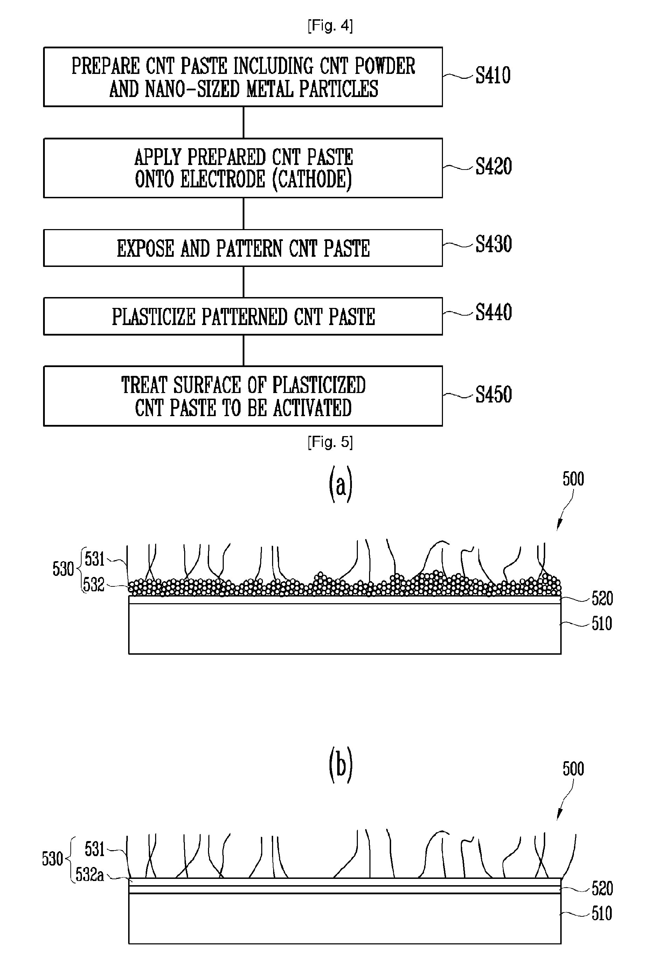

FIG. 4 is a block diagram illustrating a method of manufacturing a CNT emitter using the CNT paste manufactured in FIG. 3; FIG. 5A is an enlarged cross-sectional view schematically illustrating a CNT emitter patterned with a CNT paste to which a nano-sized metal particle is added according to an exemplary embodiment of the present invention; and FIG. 5B is an enlarged cross-sectional view schematically illustrating a CNT emitter completed after the step of plasticizing the CNT emitter of FIG. 3.

Referring to FIGs. 4 and 5A, to manufacture a CNT emitter 500, CNT paste 530 including CNT powder 531 and nano-sized metal particles 532 is first prepared (S410). The process of manufacturing the CNT paste 530 refers to the steps of FIG. 3 (from S310 to S330). Following the preparation of the CNT paste 530, the CNT paste 530 is applied onto an electrode 520 (a cathode) formed on a substrate 510 of a field emission device (FED) (S420). In the next step, the CNT paste 530 applied onto the cathode 520 is exposed and patterned in a desired pattern (S430).

Referring to FIGs. 4 and 5B, after patterning the CNT paste 530, the patterned CNT paste 530 is plasticized (S440). The step of plasticizing the CNT paste 530 (S440) includes a first plasticizing process performed at about 250 to 300°C in the atmosphere, and a second plasticizing process performed at about 320 to 450°C in a vacuum. In the first plasticizing process, an organic binder included in the CNT paste 530 can be burned out, and the metal particles can be melted depending on the kind of the metal particle. In the second plasticizing process, the metal particles may be melted under the above-mentioned conditions (in a vacuum and at a temperature of 320 to 450°C). Generally, the melting point of metal depends on the relative ratio between a surface area of the metal particle and a weight of the metal particle. Metal commonly having a melting point of 800°C can be melted at about 400°C, which is half the melting point, if the metal particle becomes smaller than µm or less, whereas it can be melted at about 100°C, if the metal particle is split into several to several tens nm size. These characteristics may depend on the kind of metal and the surrounding of a melting particle.

Through the plasticizing step (S440), the burning-out of the organic binder and the melting of the metal particles are completed, and thus the CNT emitter 500 is strongly adhered onto the cathode 520 as illustrated in FIG. 5B. In the next step, a surface of the plasticized CNT paste 500 is surface-treated to be activated (S450). For the surface treatment, various methods may be used, such as a plasma treatment, a high field treatment, a taping treatment and a rolling treatment. The rolling treatment is preferable because it removes an out-gassing problem in a vacuum and glue does not get leftover.

In the CNT emitter 500 manufactured through the above-described steps, unlike the conventional CNT emitter illustrated in FIG. 2, nano-sized metal particles 532a and nano-sized CNTs 531 are evenly dispersed. Also, a contact between the CNTs may be uniformly made by the melted metal and the FED, which includes the CNT emitter 500 having an improved electron emission characteristic through the physical surface treatment steps, can be finally manufactured. Particularly, when the CNT emitter 500 is manufactured through the manufacturing process, the emitter may have an ideal configuration so that its adhesion is far more improved than when it is simply adhered with a metal filler, thereby reducing electrical resistance and improving uniformity thereof.

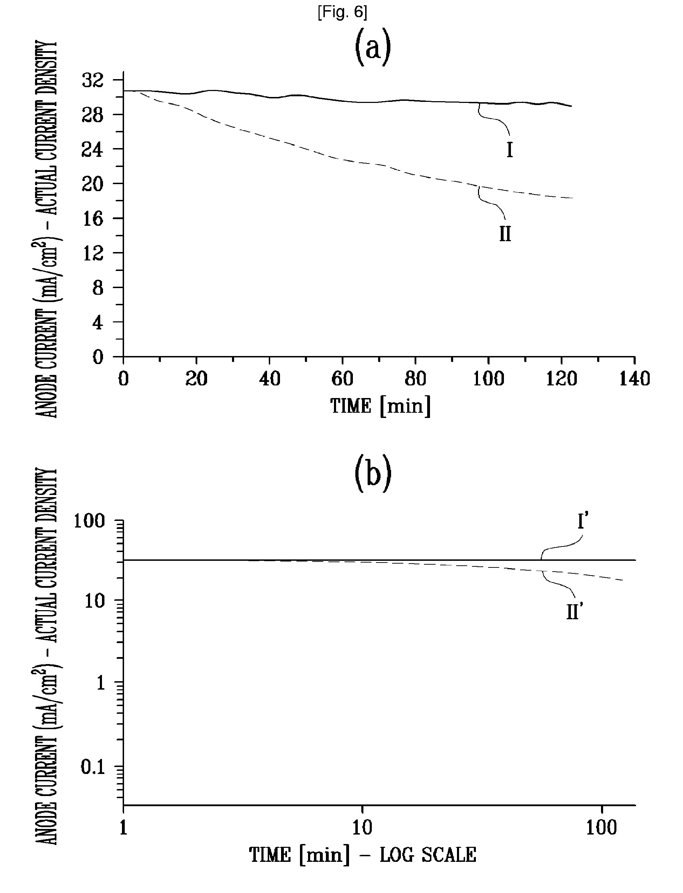

FIGs. 6A and 6B are graphs respectively illustrating electron emission char acteristics and uniformity of current density versus time between the CNT emitter manufactured according to the present invention and the CNT manufactured according to the conventional art.

FIG. 6A is a graph illustrating an electron emission characteristic, in which an x axis represents time, a y axis represents current density, and continuous electron emission is performed at a DC voltage. Graph (I) shows an electron emission characteristic of the CNT emitter manufactured using CNT paste according to the present invention, and graph (II) shows an electron emission characteristic of the CNT emitter manufactured using CNT paste according to conventional art. Referring to graphs (I) and (II), initial current densities in the both graphs are about 30mA/cm². In the beginning of measuring the current density, the CNT emitter according to the present invention and the CNT emitter according to the conventional art have almost the same current density. However, it can be identified that the CNT emitter according to the present invention has a current density of about 30mA/cm², and the conventional CNT emitter has a current density of about 19mA/cm² after two hours. That is, it can be noted that the CNT emitter manufactured according to the present invention uniformly emits electrons as compared with the conventional CNT emitter in an environment of continuous electron emission for about two hours.

FIG. 6B is a graph illustrating uniformity of current density, in which an x axis represents time (log scale), and a y axis represents current density. Graph (I') shows uniformity of current density of the CNT emitter manufactured using the CNT paste according to the present invention, and graph (II') shows uniformity of current density of the CNT paste according to the conventional art. It can be noted that the current density according to graph (I') is almost constant, but the current density according to graph (II') is reduced as the time goes on.

Consequently, when the CNT emitter is manufactured using the CNT paste formed according to the present invention, the current density is merely changed after a predetermined time (in graphs I and I'), but when the CNT emitter is manufactured using the CNT paste according to the conventional art (in graphs II and II'), the current density is significantly reduced. Thus, it can be noted that the adhesion of the CNT emitter is drastically improved due to the melted nano-sized metal particles employed in the CNT paste, thereby significantly improving the electron emission characteristic and reliability including uniformity.

While the invention has been shown and described with reference to certain exemplary embodiments thereof, it will be understood by those skilled in the art that various changes in form and details may be made therein without departing from the scope of the invention as defined by the appended claims.

## Claims

1. A method of manufacturing carbon nanotube (CNT) paste (530),
comprising the steps of;
(i) dispersing CNT powder (531) in a solvent (step S310);
(ii) adding an organic binder to the solution in which the CNT powder is dispersed (step S320); and
(iii) performing a milling process to adjust viscosity of the dispersion solution to which the organic binder is added (step S330),
wherein nano-sized metal particles (532) are added in step (i) or (iii);
the nano-sized metal particles (532) have a size of several or several tens of nanometers; and
the CNT powder (531) and the metal particles (532) constitute the CNT paste (530) with a weight percentage of 1:2;
such that the metal particles (532) are capable of being melted at a low temperature at which the CNT powder (531) does not deteriorate.

2. The method according to claim 1, further comprising the step of (iv) adding a photosensitive material and a monomer which is polymerized with the organic binder by reacting with the photosensitive material, in the mixed dispersion solution.

3. The method according to claim 1, wherein, when the metal particles (532) are formed in a powder type, the metal particles are added in step (i).

4. The method according to claim 1, wherein, when the metal particles (532) are formed in a paste type, the metal particles (532) are added in step (iii).

5. The method according to claim1, wherein the metal particles (532) comprise Ag, Ru, Ti, Pd, Zn, Fe, or Au, which has excellent conductivity.

6. The method according to claim 1, wherein the solvent has a good surface active characteristic.

7. The method according to claim 6, wherein the solvent comprises isopropyl alcohol (IPA) and terpineol.

8. A method of manufacturing a CNT emitter, comprising the steps of;
preparing a CNT paste (530) by the manufacturing method of the CNT paste according to claim 1 (step S410);
applying the CNT paste (530) onto an electrode (520) formed over a substrate (510) (step S420);
exposing and patterning the CNT paste (530) applied onto the electrode (520) (step S430);
plasticizing the patterned CNT paste (530) at a temperature at which metal particles (532) in the CNT paste are melted but CNT powder (531) in the CNT paste does not deteriorate (step S440); and
treating a surface of the plasticized CNT paste (530) to be activated (step S450).

9. The method according to claim 8, wherein the step of plasticizing the CNT paste (530) (step S440) comprises at least one of the steps of;
plasticizing the CNT paste (530) at about 250 to 300°C in an atmosphere; and
plasticizing the CNT paste (530) at about 320 to 450°C in a vacuum.

10. The method according to claim 9, wherein, in the step of plasticizing the CNT paste (530) in an atmosphere, burning out of the organic binder and melting of the metal particles (532) are performed.

11. The method according to claim 10, wherein, in the step of plasticizing the CNT paste (530) in a vacuum, carbonization of the remaining organic binder and additional melting of the metal particles (532) are performed.

12. The method according to claim 8, wherein, in the step of treating the surface of the CNT paste (530), a rolling treatment, in which glue does not get leftover, is performed.

## Patentansprüche

1. Verfahren zur Herstellung von Kohlenstoff-Nanoröhrchen-(CNT-)Paste (530), umfassend die folgenden Schritte:
(i) Dispergieren von CNT-Pulver (531) in einem Lösungsmittel (Schritt S310);
(ii) Hinzufügen eines organischen Binders in die Lösung, in der das CNT-Pulver dispergiert ist (Schritt S320); und
(iii) Durchführen eines Zerkleinerungsprozesses zum Anpassen der Viskosität der Dispersionslösung, in die der organische Binder hinzugefügt ist (Schritt S330),
wobei Nanogrößen-Metallpartikel (532) im Schritt (i) oder (iii) hinzugefügt werden;
wobei die Nanogrößen-Metallpartikel (532) eine Größe von mehreren oder mehreren zehn Nanometer haben; und
wobei das CNT-Pulver (531) und die Metallpartikel (532) die CNT-Paste (530) mit einem Gewichtsprozentanteil von 1:2 bilden;
derart, dass die Metallpartikel (532) in der Lage sind, bei einer niedrigen Temperatur geschmolzen zu werden, bei der sich das CNT-Pulver (531) nicht verschlechtert.

2. Verfahren nach Anspruch 1, ferner umfassend den Schritt (iv) des Hinzufügens eines fotosensitiven Materials und eines Monomers, das mit dem organischen Binder durch Reaktion mit dem fotosensitiven Material in der gemischten Dispersionslösung polymerisiert wird.

3. Verfahren nach Anspruch 1, wobei dann, wenn die Metallpartikel (532) als Pulvertyp gebildet sind, die Metallpartikel im Schritt (i) hinzugefügt werden.

4. Verfahren nach Anspruch 1, wobei dann, wenn die Metallpartikel (532) als Pastentyp gebildet sind, die Metallpartikel (532) im Schritt (iii) hinzugefügt werden.

5. Verfahren nach Anspruch 1, wobei die Metallpartikel (532) Ag, Ru, Ti, Pd, Zn, Fe oder Au umfassen, welches hervorragende Leitfähigkeit hat.

6. Verfahren nach Anspruch 1, wobei das Lösungsmittel eine gute Oberflächenaktivitätseigenschaft hat.

7. Verfahren nach Anspruch 6, wobei das Lösungsmittel Isopropylalkohol (IPA) und Terpineol enthält.

8. Verfahren zur Herstellung eines CNT-Emitters, umfassend die Schritte:
Herstellen einer CNT-Paste (530) durch das Herstellungsverfahren für CNT-Paste gemäß Anspruch 1 (Schritt S410);
Aufbringen der CNT-Paste (530) auf eine Elektrode (520), die über einem Substrat (510) gebildet ist (Schritt S420);
Belichten und Mustern der CNT-Paste (530), die auf die Elektrode (520) aufgebracht ist (Schritt S430);
Plastifizieren der gemusterten CNT-Paste (530) bei einer Temperatur, bei der Metallpartikel (532) in der CNT-Paste geschmolzen werden, aber CNT-Pulver (531) in der CNT-Paste sich nicht verschlechtert (Schritt S440);
Behandeln einer Oberfläche der plastifizierten CNT-Paste (530) zur Aktivierung (Schritt S450).

9. Verfahren nach Anspruch 8, wobei der Schritt des Plastifizierens der CNT-Paste (530) (Schritt S440) wenigstens einen der folgenden Schritte umfasst:
Plastifizieren der CNT-Paste (530) bei ungefähr 250 bis 300 Grad Celsius in einer Atmosphäre; und
Plastifizieren der CNT-Paste (530) bei ungefähr 320 bis 450 Grad Celsius in einem Vakuum.

10. Verfahren nach Anspruch 9, wobei im Schritt des Plastifizierens der CNT-Paste (530) in einer Atmosphäre ein Ausbrennen des organischen Binders und ein Schmelzen der Metallpartikel (532) durchgeführt werden.

11. Verfahren nach Anspruch 10, wobei im Schritt des Plastifizierens der CNT-Paste (530) in einem Vakuum eine Karbonisierung des verbleibenden organischen Binders und zusätzliches Schmelzen der Metallpartikel (532) durchgeführt werden.

12. Verfahren nach Anspruch 8, wobei im Schritt des Behandelns der Oberfläche der CNT-Paste (530) eine Walzbehandlung durchgeführt wird, bei der kein Kleber übrig bleibt.

## Revendications

1. Procédé de fabrication d'une pâte de nanotubes de carbone (CNT) (530), comprenant les étapes de :
(i) dispersion d'une poudre de CNT (531) dans un solvant (étape S310) ;
(ii) addition d'un liant organique à la solution dans laquelle la poudre de CNT est dispersée (étape S320) ; et
(iii) mise en oeuvre d'un traitement de broyage pour ajuster la viscosité de la solution de dispersion à laquelle le liant organique est ajouté (étape S330),
dans lequel
des particules métalliques de taille nanométriques (532) sont ajoutées à l'étape (i) ou (iii) ;
les particules métalliques de taille nanométriques (532) ayant une taille de plusieurs ou plusieurs dizaines de nanomètres, et
la poudre de CNT (531) et les particules métalliques (532) constituent la pâte de CNT (530) avec un pourcentage en poids de 1:2 ;
de façon que les particules métalliques (532) puissent être fondues à une température basse à laquelle la poudre de CNT (531) ne se détériore pas.

2. Procédé selon la revendication 1, comprenant en outre l'étape de (iv) addition d'un matériau photosensible et d'un monomère qui est polymérisé avec le liant organique par réaction avec le matériau photosensible, dans la solution de dispersion mélangée.

3. Procédé selon la revendication 1, dans lequel, quand les particules métalliques (532) sont formées selon un type en poudre, les particules métalliques sont ajoutées à l'étape (i).

4. Procédé selon la revendication 1, dans lequel, quand les particules métalliques (532) sont formées selon un type en pâte, les particules métalliques (532) sont ajoutées à l'étape (iii).

5. Procédé selon la revendication 1, dans lequel les particules métalliques (532) comprennent Ag, Ru, Ti, Pd, Zn, Fe ou Au, qui a une excellente conductivité.

6. Procédé selon la revendication 1, dans lequel le solvant a une bonne caractéristique tensioactive.

7. Procédé selon la revendication 6, dans lequel le solvant comprend de l'alcool isopropylique (IPA) et du terpinéol.

8. Procédé pour fabriquer un émetteur à CNT, comprenant les étapes de :
préparation d'une pâte de CNT (530) par le procédé de fabrication de la pâte de CNT selon la revendication 1 (étape S410) ;
application de la pâte de CNT (530) sur une électrode (520) formée au-dessus d'un substrat (510) (étape S420) ;
exposition de et formation d'un motif sur la pâte de CNT (530) appliquée sur l'électrode (520) (étape S430) ;
plastification de la pâte de CNT dotée d'un motif (530) à une température à laquelle les particules métalliques (532) dans la pâte de CNT sont fondues mais la poudre de CNT (531) dans la pâte de CNT ne se détériore pas (étape S440) ; et
traitement d'une surface de la pâte de CNT plastifiée (530) devant être activée (étape S450).

9. Procédé selon la revendication 8, dans lequel l'étape de plastification de la pâte de CNT (530) (étape S440) comprend au moins l'une des étapes de :
plastification de la pâte de CNT (530) à une température d'environ 250 à 300°C dans une atmosphère ; et
plastification de la pâte de CNT (530) à une température d'environ 320 à 450°C dans un vide.

10. Procédé selon la revendication 9, dans lequel, dans l'étape de plastification de la pâte de CNT (530) dans une atmosphère, sont mis en oeuvre un brûlage du liant organique et une fonte des particules métalliques (532).

11. Procédé selon la revendication 10, dans lequel, dans l'étape de plastification de la pâte de CNT (530) dans un vide, sont mises en oeuvre une carbonisation du liant organique restant et une fonte additionnelle des particules métalliques (532).

12. Procédé selon la revendication 8, dans lequel, dans l'étape de traitement de la surface de la pâte de CNT (530), est mis en oeuvre un traitement de laminage, dans lequel il ne reste pas de colle.
